(19) Europäisches Patentamt
European Patent Office
Office européen des brevets

(11) EP 2 605 021 B1

(12) **FASCICULE DE BREVET EUROPEEN**

(45) Date de publication et mention
de la délivrance du brevet:
**18.05.2016 Bulletin 2016/20**

(51) Int Cl.:
**G01P 13/02** (2006.01)          **G01P 5/16** (2006.01)
**G01M 9/06** (2006.01)

(21) Numéro de dépôt: **12196596.6**

(22) Date de dépôt: **11.12.2012**

(54) **Sonde de mesure d'incidence locale et procédé mettant en oeuvre la sonde**

Sonde zum Messen des lokalen Anstellwinkels, und Verfahren zum Betreiben der Sonde

Probe for measuring local incidence and method using the probe

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.12.2011 FR 1103808**

(43) Date de publication de la demande:
**19.06.2013 Bulletin 2013/25**

(73) Titulaire: **Thales**
**92200 Neuilly Sur Seine (FR)**

(72) Inventeur: **Mandle, Jacques**
**07130 Saint Peray (FR)**

(74) Mandataire: **Collet, Alain et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 1 020 717     WO-A1-93/03326
US-B1- 6 557 423**

**Description**

L'invention concerne une sonde de mesure d'incidence locale et un procédé mettant en oeuvre la sonde.

L'invention trouve une utilité particulière dans le domaine aéronautique où la connaissance de l'incidence d'un écoulement d'air entourant un aéronef est essentielle au pilotage de l'aéronef. L'incidence par rapport à un plan horizontal de l'aéronef est un paramètre important pour déterminer la portance de l'aéronef et particulièrement à proximité du décrochage. L'incidence par rapport à un plan vertical de l'aéronef est également importante, c'est le dérapage de l'aéronef. Pour déterminer ces deux paramètres, incidence et dérapage, on peut mesurer localement l'orientation du flux d'air sur la peau de l'aéronef. Il s'agit de mesures d'incidences locales que l'on réalise en des points particuliers de l'aéronef.

Trois grandes familles de sondes aérodynamiques ont été développées pour mesurer l'incidence locale sur aéronef.

Une première famille de sonde utilise un appendice mobile sortant de la peau de l'aéronef. Cet appendice mobile peut être en forme de drapeau s'orientant dans l'axe de l'écoulement d'air. L'orientation du drapeau donne alors l'incidence locale de l'écoulement d'air. Ces sondes mobiles doivent comprendre des systèmes de roulement entre partie fixe et mobiles avec le minimum de frottement.

Une seconde famille de sonde utilise un appendice muni de deux orifices activant un moteur pneumatique asservissant ledit appendice de manière à ce que les deux pressions restent égales.

Une troisième famille de sonde utilise un appendice fixe sortant de la peau de l'aéronef. La détermination de l'incidence locale peut se faire à partir d'une mesure différentielle entre deux prises de pressions disposées sur le nez de l'appendice fixe, l'une située sur l'intrados de l'appendice et l'autre sur l'extrados. L'intrados et l'extrados sont définis par rapport à une zone de l'appendice ou l'écoulement forme un point d'arrêt à incidence nulle. Ce procédé de détermination de l'incidence locale présente plusieurs inconvénients. Pour obtenir une précision suffisante, notamment lors de certaines phases de vol, le gain de la chaine de mesure doit être suffisant et on obtient rapidement une saturation de celle-ci. De plus, lors de grandes incidences, l'écoulement se décolle de l'appendice, faussant ainsi la mesure d'incidence locale.

D'autres principes ont été évoqués : mesure par LIDAR ou systèmes complètement mécaniques.

La demande de brevet internationale WO 93/03326 décrit une sonde de mesure d'incidence avec des prises de pression disposées sur le nez du corps de la sonde. Les demandes de brevet US 6 557 423 et EP 1 020 717 décrivent des sondes de mesure comprenant plusieurs prises de pression dont on choisit pour la mesure deux prises situées au vent et une située sous le vent.

L'invention vise à pallier tout ou partie des problèmes cités plus haut en proposant une sonde de mesure de l'incidence locale à appendice fixe et un procédé mettant en oeuvre la sonde. L'invention permet d'obtenir des mesures précises de l'incidence sur une grande étendue de mesure.

A cet effet, l'invention a pour objet une sonde de mesure de l'incidence locale d'un écoulement fluide le long d'une paroi, la sonde comprenant un corps de sonde destiné à être fixé à la paroi et s'étendant selon une direction principale, autour de laquelle l'incidence peut être mesurée dans une plage d'incidence, au moins cinq prises de pression disposées sur un nez du corps de sonde, le nez étant situé d'un coté du corps par rapport à une plus grande section du corps perpendiculairement à la direction principale, le nez formant une surface localement perpendiculaire à l'incidence à l'intérieur de la plage, des moyens de mesure de pression associés aux prises de pression et des moyens de calcul aptes à déterminer une incidence de l'écoulement par rapport à la direction principale du corps de sonde en fonction des pressions mesurées par les moyens de mesure de pression, caractérisée en ce que la plage d'incidence s'étend de part et d'autre de la direction principale jusqu'à la plus grande section du corps de la sonde, et en ce que les moyens de calcul sont configurés pour choisir parmi les prises de pression celles permettant d'obtenir la meilleure précision de mesure de l'incidence locale et pour calculer l'incidence locale par rapport à la direction principale à partir des mesures de pression effectuées dans les prises de pression choisies.

L'invention a également pour objet un procédé de mesure de l'incidence locale d'un écoulement fluide le long d'une paroi au moyen d'une sonde comprenant un mat destiné à être fixé à la paroi, un corps de sonde fixé au mat et s'étendant selon une direction principale, au moins trois prises de pression disposées sur un nez du corps de sonde, des moyens de mesure de pression associés aux prises de pression et des moyens de calcul aptes à déterminer une incidence de l'écoulement par rapport à la direction principale du corps de sonde, caractérisé en ce qu'il consiste à :

- choisir parmi les prises de pression celles permettant d'obtenir la meilleure précision de mesure de l'incidence,
- puis à calculer l'incidence par rapport à la direction principale à partir des mesures de pression effectuées dans les prises de pression choisies.

Le fait de choisir parmi les prises de pression celles permettant d'obtenir la meilleure précision de mesure de l'incidence locale permet d'augmenter l'étendue de mesure d'incidence et ainsi de mesurer de plus grandes incidences locales. Plus précisément, aux grandes incidences, certaines prises de pression peuvent être situées dans une partie du corps de sonde où l'écoulement d'air est décollé. Ces prises de pression ne seront pas choisies pour calculer l'incidence locale.

L'invention sera mieux comprise et d'autres avantages apparaîtront à la lecture de la description détaillée d'un mode de réalisation donné à titre d'exemple, description illustrée par le dessin joint dans lequel :

La figure 1 représente une sonde d'incidence locale montée sur la peau d'un aéronef ;
La figure 2 représente schématiquement différents éléments fonctionnels de la sonde utilisés pour déterminer l'incidence locale ;
Les figures 3 et 4 représentent deux variantes pour le corps de la sonde ;
Les figures 5 et 6 représentent un aileron mettant en oeuvre de l'invention.

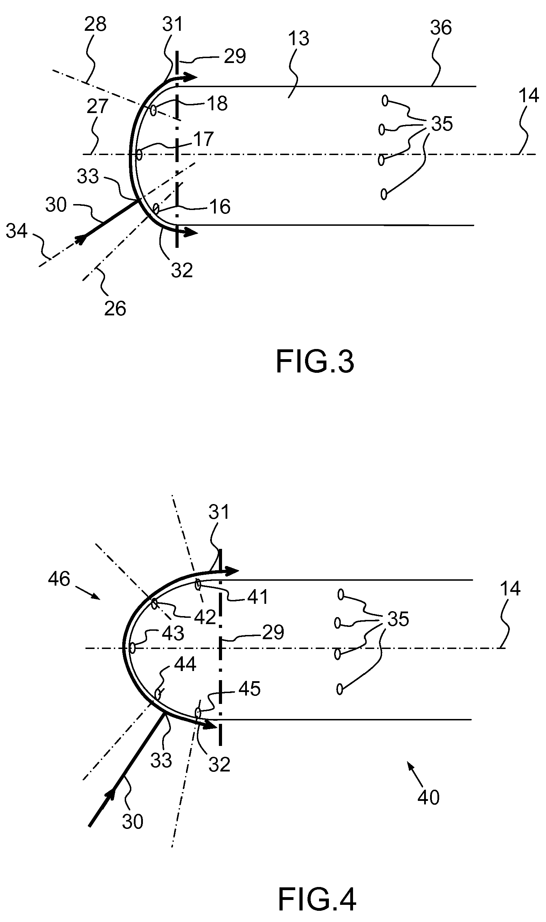

Seules les figures 4 à 6 correspondent à l'invention revendiquée.

Par souci de clarté, les mêmes éléments porteront les mêmes repères dans les différentes figures.

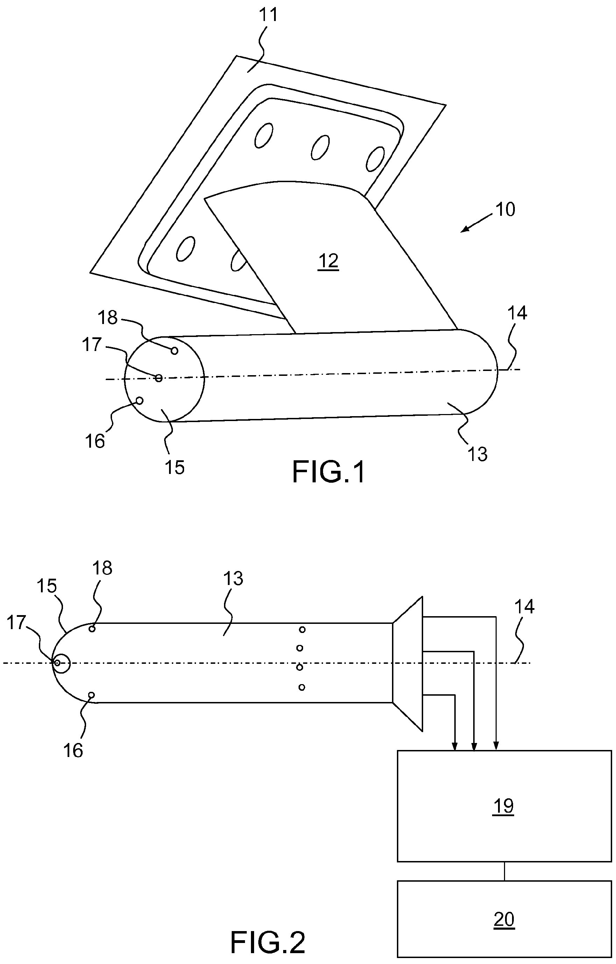

La figure 1 représente une sonde 10 de mesure d'incidence locale montée sur la peau 11 d'un aéronef. La sonde 10 permet de mesurer l'incidence de l'air circulant le long de la peau 11. Une telle sonde peut être positionnée à 3h ou à 9h sur la peau du nez de l'aéronef afin de déterminer l'incidence de l'aéronef. On peut également la positionner à 6h ou à 12h afin de déterminer le dérapage de l'aéronef.

La sonde 10 comprend un mat 12 et un corps de sonde 13 fixé au mat 12. Le mat 12 permet de positionner le corps de sonde 13 hors d'une couche limite crée dans l'écoulement de l'air au voisinage immédiat de la peau 11. Le mat 12 a par exemple la forme d'une aile d'avion afin de limiter la trainée dans l'écoulement. Le mat 12 est fixé à la peau 11 par exemple au moyen de vis. Le corps de sonde 13 est par exemple de forme cylindrique. Le corps de sonde 13 s'étend selon une direction principale 14 qui dans l'exemple de la forme cylindrique est l'axe de la forme. Lors du montage de la sonde 10 sur la peau de l'aéronef, il est avantageux d'aligner la direction principale 14 avec la direction de l'air le long de la peau 11 lorsque l'aéronef est en vol horizontal.

La sonde 10 ne comprend aucun organe mobile destiné à s'orienter dans l'axe de l'écoulement de l'air. La sonde 10 fait partie de la famille des sondes fixes.

Le corps de sonde 13 possède une extrémité 15 appelée nez et faisant au moins en partie face à l'écoulement lorsque celui-ci suit la direction 14. Autrement dit, le nez 15 présente une inclinaison non nulle par rapport à la direction 14, contrairement à une partie arrière cylindrique du corps de sonde 13. La sonde 10 comprend dans cet exemple trois prises de pression 16, 17 et 18 disposées sur le nez 15 du corps de sonde 13.

La figure 2 représente schématiquement la sonde 10 qui comprend d'autres organes pouvant se situer à l'intérieur de la peau 11 de l'aéronef, comme notamment des moyens de mesure de pression 19 associés aux prises de pression 16, 17 et 18 et des moyens de calcul 20 aptes à déterminer l'incidence de l'écoulement par rapport à la direction 14. Les prises de pression 16, 17 et 18 sont raccordées aux moyens de mesure de pression 19 par des canaux pneumatiques situées dans le corps de sonde 13 et dans le mat 12. Les moyens de mesure de pression 19 peuvent par exemple être des capteurs de pression. On peut comparer la pression de chaque prise de pression 16, 17 et 18 à une pression de référence. On peut également comparer les pressions des différentes prises de pression entre elles. On verra plus loin l'intérêt de capteurs de pression différentiels. A titre d'alternative, on peut également mettre en oeuvre des débitmètres à la place des capteurs de pression.

Selon l'invention, les moyens de calcul 20 sont configurés pour choisir parmi les prises de pression 16, 17 et 18 celles permettant d'obtenir la meilleure précision de mesure de l'incidence locale et pour calculer l'incidence locale par rapport à la direction principale 14 à partir des mesures de pression effectuées dans les prises de pression choisies.

La figure 3 représente une forme avantageuse du corps de sonde 13. Le nez 15 du corps de sonde 13 possède une forme arrondie. Chacune des prises de pression 16, 17 et 18, est disposée en une position où on définit une direction normale au corps de sonde 13, respectivement 26, 27 et 28. Il est possible de placer la prise de pression 17 de telle sorte que sa direction normale 27 soit confondue avec la direction 14. Les prises de pressions 16, 17 et 18 sont réparties sur le nez 15 de forme arrondie de telle sorte que les directions normales 26, 27 et 28 présentent des angles différents dans un plan dans lequel est mesuré l'angle d'incidence. Ce plan est ici le plan de la figure 3. Ce plan est disposé de telle sorte à être parallèle à la paroi 11 le long de laquelle on cherche à connaitre l'incidence locale de l'écoulement. Le nez du corps de sonde est défini comme étant situé d'un coté du corps par rapport à la plus grande section 29 du corps perpendiculairement à la direction principale 14. Dans ce mode de réalisation, la section 29 est une section de la surface 36 parallèle à la direction 14. La mesure d'incidence peut se faire à l'intérieur d'une plage d'incidence répartie autour de la direction principale 14. Le nez forme une surface localement perpendiculaire à l'incidence à l'intérieur de la plage de mesure. La plage de mesure peut s'étendre de part et d'autre de la direction 14 jusqu'à la section 29. Autrement dit la plage de mesure est de +ou- 90° autour de la direction 14. Avantageusement, la plage de mesure est limitée par les directions perpendiculaires à la surface du nez au niveau des deux prises de pression extrêmes 26 et 28.

Une première étape d'un procédé mettant en oeuvre la sonde 10 consiste à choisir parmi les prises de pression 16, 17 et 18 celles permettant d'obtenir la meilleure précision de mesure de l'incidence. Sur la figure 3, la direction de l'écoulement en amont du corps de sonde 13 est représenté par la flèche 30. Lorsque l'écoulement atteint le corps de sonde 13, il se sépare en deux parties 31 et 32. La séparation se produit au niveau d'un point d'arrêt 33 au niveau duquel on peut définir une direction normale 34 au corps de sonde 13. L'angle que fait la direction 34 par rapport à la direction 14 est l'incidence locale recherchée.

Pour choisir les prises de pression les mieux à même de définir cette incidence, on peut tout d'abord déterminer une position approximative du point d'arrêt 33 de l'écoulement sur le corps de sonde 13 puis retenir les deux prises de pression les plus proches du point d'arrêt 33.

Pour définir cette position approximative, on peut rechercher, parmi les pressions mesurées dans les trois prises de pression 16, 17 et 18, les deux prises de pression qui ont les pressions les plus élevées. En effet, sur une surface arrondie, plus on s'éloigne du point d'arrêt 33, plus les pressions diminuent. Sur la figure 3, le point d'arrêt 33 se situe entre les prises de pression 16 et 17. Ces deux prises de pression auront une pression supérieure à celle de la prise de pression 18. Le choix se porte donc sur les prises de pression 16 et 17. Cette méthode de choix requiert une répartition angulaire sensiblement constante des directions normales 26 à 28 des différentes prises de pression 16 à 18.

A titre d'alternative, on peut calculer une incidence locale approximative à partir des mesures de pression effectuées dans les prises de pression les plus éloignées de la direction principale du corps de sonde 13. Il s'agit des prises de pression 16 et 18 dans l'exemple représenté. La position du point d'arrêt 33 est alors définie sur le corps de sonde 13 en un point où la direction approximative de l'incidence locale est normale au corps de sonde 13.

Le calcul de l'incidence locale approximative peut être réalisé à partir de la différence entre les pressions mesurées au niveau des deux prises de pression 16 et 18. En effet, l'incidence varie proportionnellement à cette différence. On a également constaté que la vitesse de l'aéronef intervenait dans le calcul de l'incidence. Plus précisément, l'incidence est proportionnelle au rapport entre la différence entre les pressions mesurées au niveau des deux prises de pression 16 et 18 et une différence entre la pression totale et la pression statique de l'écoulement.

Autrement dit, l'incidence $\alpha_a$ locale approximative peut s'exprimer de la façon suivante :

$$\alpha_a = K \frac{P_{18} - P_{16}}{P_T - P_S} \quad (1)$$

avec P18 et P16 : les pressions mesurées respectivement par les prises de pression 18 et 16, $P_T$, la pression totale et $P_S$ la pression statique de l'écoulement. K est un coefficient dépendant de la géométrie de la sonde. Il peut être déterminé de façon empirique par des essais en soufflerie.

La pression totale $P_T$ et la pression statique $P_S$

peuvent être déterminées chacune par une sonde propre, distincte de la sonde 10. Avantageusement, la pression totale $P_T$ et la pression statique $P_S$ sont mesurées par la sonde 10 elle-même. A cet effet, la sonde 10 comprend une prise de pression totale et une prise de pression statique. La prise de pression totale peut être la prise de pression 17 de direction normale 27 confondue avec la direction 14. La prise de pression totale comprend par exemple un tube s'étendant selon la direction principale 14 du corps de sonde 13. Ce tube est couramment appelé tube de Pitot. La prise de pression statique peut être formée de plusieurs prises de pressions 35 disposées sur le corps de sonde 13 en arrière des prises de pression 16 à 18. Les prises de pression 35 sont en général disposée sur une surface 36 du corps de sonde 13, surface parallèle à la direction 14. Les différentes prises de pression sont raccordées entre elles afin de mesurer une pression moyenne sensiblement invariante lors de modifications de l'incidence de l'écoulement par rapport au corps de sonde 13.

Une seconde étape du procédé de l'invention consiste à calculer l'incidence $\alpha$ par rapport à la direction principale 14 à partir des mesures de pression effectuées dans les prises de pression choisies, les prises de pression 16 et 17 dans notre exemple. On peut répéter le même type de calcul que précédemment :

$$\alpha_a = K \frac{P_{17} - P_{16}}{P_T - P_S} \quad (2)$$

On obtient ainsi une bien meilleure précision qu'en utilisant uniquement les prises de pression 16 et 18 les plus éloignées de la direction principale 14.

Plus haut, on a évoqué le fait d'utiliser des capteurs de pression différentiels. Ces capteurs sont placés entre les différentes prises de pression de la sonde 10 en fonction du besoin des moyens de calcul 20. Dans l'exemple représenté, on utilise des capteurs donnant les différences suivantes : P18-P16, P18-P17, P17-P16 ainsi que $P_T$-$P_S$. De tels capteurs améliorent la précision de calcul de l'incidence locale car ils évitent la comparaison à une pression de référence qui peut être différente d'un capteur à l'autre.

La figure 4 représente une sonde 40 selon l'invention dans laquelle cinq prises de pression 41, 42, 43, 44 et 45 sont disposées sur un nez 46 d'un corps de sonde 47 semblable au corps de sonde 13 et fixé sur le mat 12. Les cinq prises de pression 41, 42, 43, 44 et 45 sont destinées à la détermination de l'incidence locale. Comme précédemment, le nez 46 du corps de sonde 47 possède une forme arrondie de sorte à disposer les prises de pression 41, 42, 43, 44 et 45 en des positions distinctes où des directions normales au corps de sonde 47 présentent des angles différents dans un plan dans lequel est mesuré l'angle d'incidence.

Le fait d'augmenter le nombre de prises de pression permet soit d'améliorer la précision dans le calcul de l'incidence locale en rapprochant angulairement les directions normales des prises de pression, soit d'augmenter l'amplitude de mesure en permettant d'atteindre des incidences plus importantes. Dans l'exemple représenté, le point d'arrêt 33 est situé entre les prises de pression 44 et 45. Le choix des prises de pression est réalisé comme expliqué à partir de la variante de la figure 3. Lors du calcul de l'incidence locale approximative $\alpha_a$ à partir des mesures de pression effectuées dans les prises de pression les plus éloignées de la direction principale 14 du corps de sonde, en l'occurrence les prises de pression 41 et 45, Il est possible que la prise de pression 41 soit dans un domaine décollé de l'écoulement. Cela ne perturbe pas le calcul approximatif. Ensuite, l'incidence locale est calculée à partir de la différence entre les pressions mesurées dans les deux prises de pression 44 et 45 qui ne sont pas dans le domaine décollé.

Dans la deuxième étape du procédé il est possible de mesurer la pression totale $P_T$ au moyen la prise de pression 43 quelque soit le choix réalisé à la première étape. La prise de pression 43 est disposée sur la direction 14. Un étalonnage en soufflerie permettra de corriger d'éventuels écarts entre la pression totale effective de l'écoulement et la pression mesurée au moyen la prise de pression 43. Alternativement, il est possible d'utiliser la prise de pression la plus proche du point d'arrêt 33 comme prise de pression pour mesurer la pression totale $P_T$. Dans l'exemple représenté, on choisit la prise de pression 44. Cette prise de pression n'est pas parfaitement dans l'axe de l'écoulement et nécessite donc un étalonnage en soufflerie. Dans cette deuxième alternative, on obtient cependant une meilleure précision que dans la première alternative.

Il est bien entendu que ces deux alternatives peuvent être mises en oeuvre dans la variante de sonde 10 représentée sur la figure 3.

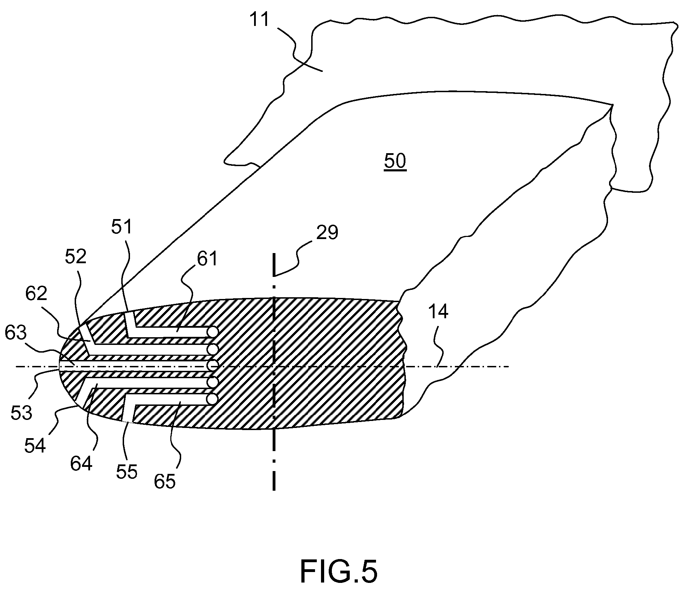

La figure 5 représente la mise en oeuvre de l'invention sur un aileron par exemple utilisé pour la stabilisation du vol d'un aéronef. De façon plus générale l'invention peut être mise en oeuvre pour tout appendice protubérant par rapport au fuselage d'un aéronef, appendice au niveau duquel on souhaite connaitre l'incidence locale du flux d'air l'entourant. Par aéronef, on peut entendre tout engin volant motorisé, comme par exemple un avion, un hélicoptère ou même un missile.

Sur la figure 5, un aileron 50 est fixé sur la paroi 11. L'aileron 50 forme le corps de sonde permettant de mesurer l'incidence locale d'un écoulement long de la paroi 11. L'aileron 50 comprend cinq prises de pression 51, 52, 53, 54 et 55 disposées dans un plan 56 parallèle à la paroi au niveau de la fixation de l'aileron 50. Sur la figure 5, l'aileron 50 est représenté en perspective coupée par le plan 56. De plus seule la partie avant de l'aileron 50, partie contenant le bord d'attaque de l'aileron est représentée. La partie avant forme le nez du corps de sonde.

Chacune des prises de pression 51, 52, 53, 54 et 55 est raccordée aux moyens de mesure de pression 19 par un canal pneumatique, respectivement 61, 62, 63, 64 et 65 situées dans l'aileron 50.

Sur la figure 5, le bord d'attaque de l'aileron 50 est arrondi. Autrement dit la surface du nez ne présente aucune discontinuité, autrement dit aucun angle vif.

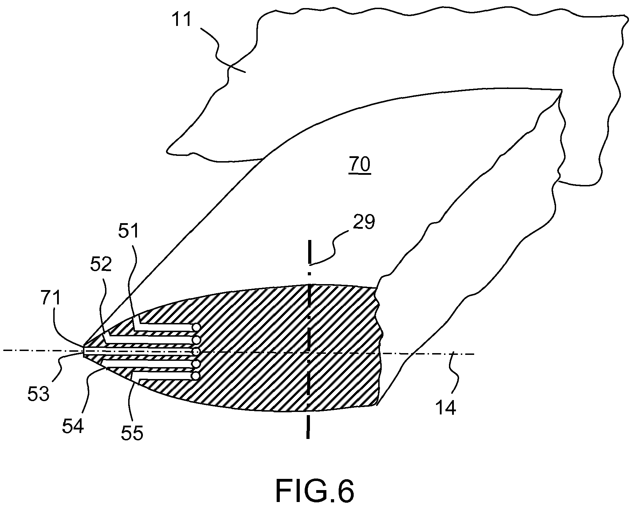

Sur la figure 6, un autre aileron 70 mettant en oeuvre l'invention est représenté. A la différence de l'aileron 50, le bord d'attaque 71 de l'aileron 70 possède une discontinuité anguleuse au niveau de la prise de pression 53 située sur l'axe 14. Dans cette variante, de part et d'autre de la discontinuité, les deux prises de pression, 51 et 52 d'une part, 54 et 55 d'autre part sont disposées sur une surface de l'aileron ne présentant pas de discontinuité. Autrement dit, la sonde d'incidence possède au moins deux prises de pression disposées sur une surface de la sonde sans discontinuité.

Sur les ailerons 50 et 70, il est bien entendu possible d'utiliser la prise de pression 53 comme prise de pression totale. Il est également possible de disposer sur la surface de l'aileron une ou plusieurs prises de pression statique semblable aux prises de pression 35.

## Revendications

1. Sonde de mesure de l'incidence locale d'un écoulement fluide le long d'une paroi (11), la sonde (40) comprenant un corps de sonde (47, 50, 70) destiné à être fixé à la paroi (11) et s'étendant selon une direction principale (14), autour de laquelle l'incidence peut être mesurée dans une plage d'incidence, au moins cinq prises de pression (41, 42, 43, 44, 45 ; 51, 52, 53, 54, 55) disposées sur un nez (46) du corps de sonde (47), le nez étant situé d'un coté du corps par rapport à une plus grande section (29) du corps perpendiculairement à la direction principale (14), le nez formant une surface localement perpendiculaire à l'incidence à l'intérieur de la plage, des moyens de mesure de pression (19) associés aux prises de pression (41, 42, 43, 44, 45) et des moyens de calcul (20) aptes à déterminer une incidence de l'écoulement par rapport à la direction principale (14) du corps de sonde (47) en fonction des pressions mesurées par les moyens de mesure de pression (19), **caractérisée en ce que** la plage d'incidence s'étend de part et d'autre de la direction principale (14) jusqu'à la plus grande section (29) du corps de sonde (47, 50, 70), **en ce que** les moyens de calcul (20) sont configurés pour choisir parmi les prises de pression (41, 42, 43, 44, 45 ; 51, 52, 53, 54, 55) celles permettant d'obtenir la meilleure précision de mesure de l'incidence locale et pour calculer l'incidence locale par rapport à la direction principale (14) à partir des mesures de pression effectuées dans les prises de pression choisies (44, 45).

2. Sonde selon la revendication 1, **caractérisée en ce que** les moyens de calcul (20) sont configurés pour déterminer l'incidence locale par rapport à la direction principale (14) à partir des mesures de pression effectuées dans les prises de pression choisies (44, 45) proportionnellement à une différence entre les pressions mesurées au niveau des prises de pression choisies (44, 45).

**3.** Sonde selon l'une des revendications précédentes, **caractérisée en ce que** le nez (47) du corps de sonde (13) possède une forme arrondie de sorte à disposer les prises de pression (41, 42, 43, 44, 45) sur le nez (47) du corps de sonde (13) en des positions distinctes où des directions normales au corps de sonde (13) présentent des angles différents dans un plan dans lequel est mesuré l'angle d'incidence.

**4.** Sonde selon l'une des revendications précédentes, **caractérisée en ce qu'**elle est formée sur un aileron (50, 70) fixé à la paroi (11).

**5.** Sonde selon la revendication 4, **caractérisée en ce que** le nez possède une discontinuité (71) située au niveau de la direction principale (14).

**6.** Sonde selon la revendication 5, **caractérisée en ce qu'**elle possède au moins deux prises de pression (51, 52 ; 54, 55) disposées sur une surface de la sonde sans discontinuité.

**7.** Sonde selon l'une des revendications précédentes, **caractérisée en ce qu'**elle comprend en outre une prise de pression totale (43, 53) comprenant un tube s'étendant selon la direction principale (14) du corps de sonde, (50, 70).

**8.** Sonde selon l'une des revendications précédentes, **caractérisée en ce qu'**elle comprend en outre une prise de pression statique (35).

**9.** Procédé de mesure de l'incidence locale d'un écoulement fluide le long d'une paroi (11) au moyen d'une sonde (40) selon l'une des revendiations précédentes, **caractérisé en ce qu'**il consiste à :

• choisir parmi les prises de pression (41, 42, 43, 44, 45 ; 51, 52, 53, 54, 55) celles permettant d'obtenir la meilleure précision de mesure de l'incidence,
• puis à calculer l'incidence par rapport à la direction principale (14) à partir des mesures de pression effectuées dans les prises de pression choisies (44, 45).

**10.** Procédé selon la revendication 9, **caractérisé en ce que** le choix parmi les prises de pression (41, 42, 43, 44, 45) consiste à :

• déterminer une position approximative d'un point d'arrêt (33) de l'écoulement sur le corps de sonde (13, 47),
• puis retenir les deux prises de pression (44, 45) les plus proches du point d'arrêt (33).

**11.** Procédé selon la revendication 10, **caractérisé en ce que** la détermination de la position approximative d'un point d'arrêt (33) consiste à :

• calculer une incidence locale approximative ($\alpha_a$) à partir des mesures de pression effectuées dans les prises de pression les plus éloignées (41, 45) de la direction principale (14) du corps de sonde (47) ;
• la position du point d'arrêt (33) étant définie sur le corps de sonde (13, 47) en un point où la direction approximative ($\alpha_a$) de l'incidence locale est normale au corps de sonde (47).

**12.** Procédé selon l'une quelconque des revendications 9 à 11, **caractérisé en ce que** l'incidence locale ($\alpha$) par rapport à la direction principale (14) à partir des mesures de pression effectuées dans les prises de pression choisies (44, 45) est proportionnelle à une différence entre les pressions mesurées au niveau des deux prises de pression choisies (44, 45).

**13.** Procédé selon la revendication 12, mettant en oeuvre une sonde (40) comprenant en outre une prise de pression totale (43) et une prise de pression statique (35), **caractérisé en ce que** la valeur de l'incidence locale ($\alpha$) est proportionnelle au rapport entre la différence entre les pressions mesurées au niveau des deux prises de pression choisies et une différence entre les pressions mesurées au niveau de la prise de pression totale et au niveau de la prise de pression statique $\left(\alpha_a = K \dfrac{P_{17} - P_{16}}{P_T - P_S}\right)$.

**14.** Procédé selon la revendication 13, mettant en oeuvre une sonde selon la revendication 7, **caractérisé en ce que** la prise de pression totale est choisie parmi les prises de pression (41, 42, 43, 44, 45) disposées sur le nez (46) du corps de sonde (13, 47) comme étant la plus proche du point d'arrêt (33).

**Patentansprüche**

**1.** Sonde zum Messen des lokalen Anströmwinkels eines Fluidstroms entlang einer Wand (11), wobei die Sonde (40) einen Sondenkörper (47, 50, 70) zum Anbringen an der Wand (11) aufweist, der in einer Hauptrichtung (14) verläuft, um die der Anströmwinkel in einem Anströmwinkelbereich gemessen werden kann, wenigstens fünf Drucknahmestellen (41, 42, 43, 44, 45; 51, 52, 53, 54, 55), die auf einer Nase (46) des Sondenkörpers (47) angeordnet sind, wobei sich die Nase auf einer Seite des Körpers mit Bezug auf einen größeren Querschnitt (29) des Körpers senkrecht zur Hauptrichtung (14) befindet, wobei die Nase eine Fläche bildet, die lokal senkrecht zum Anströmwinkel innerhalb des Bereichs ist, mit den Drucknahmestellen (41, 42, 43, 44, 45) assoziierte Druckmessmittel (19) und Rechenmittel (20) zum Ermitteln eines Anströmwinkels des Stroms mit Bezug auf die Hauptrichtung (14) des Sondenkörpers (47) in Abhängigkeit von den von den Druckmessmitteln (19) gemessenen Drücken, **dadurch gekennzeichnet, dass** der Anströmwinkelbereich auf beiden Seiten der Hauptrichtung (14) bis zum größten Querschnitt (29) des Sondenkörpers (47, 50, 70) verläuft, dadurch, dass die Rechenmittel (20) zum Auswählen von Drucknahmestellen aus den Drucknahmestellen (41, 42, 43, 44, 45; 51, 52, 53, 54, 55), die die beste Messgenauigkeit des lokalen Anströmwinkels zulassen, und zum Berechnen des lokalen Anströmwinkels mit Bezug auf die Hauptrichtung (14) auf der Basis der an den gewählten Drucknahmestellen (44, 45) durchgeführten Druckmessungen konfiguriert sind.

2. Sonde nach Anspruch 1, **dadurch gekennzeichnet, dass** die Rechenmittel (20) zum Ermitteln des lokalen Anströmwinkels mit Bezug auf die Hauptrichtung (14) auf der Basis der an den gewählten Drucknahmestellen (44, 45) durchgeführten Druckmessungen proportional zu einer Differenz zwischen den an den gewählten Drucknahmestellen (44, 45) gemessenen Drücken konfiguriert sind.

3. Sonde nach einem der vorherigen Ansprüche, **dadurch gekennzeichnet, dass** die Nase (47) des Sondenkörpers (13) eine abgerundete Form hat, um die Drucknahmestellen (41, 42, 43, 44, 45) auf der Nase (47) des Sondenkörpers (13) an getrennten Positionen anzuordnen, wo Richtungen senkrecht zum Sondenkörper (13) unterschiedliche Winkel in einer Ebene haben, in der der Anströmwinkel gemessen wird.

4. Sonde nach einem der vorherigen Ansprüche, **dadurch gekennzeichnet, dass** sie auf einem an der Wand (11) befestigten Flügel (50, 70) ausgebildet ist.

5. Sonde nach Anspruch 4, **dadurch gekennzeichnet, dass** die Nase eine in der Hauptrichtung (14) befindliche Diskontinuität (71) hat.

6. Sonde nach Anspruch 5, **dadurch gekennzeichnet, dass** sie wenigstens zwei Drucknahmestellen (51, 52; 54, 55) hat, die auf einer diskontinuitätsfreien Fläche der Sonde angeordnet sind.

7. Sonde nach einem der vorherigen Ansprüche, **dadurch gekennzeichnet, dass** sie ferner eine Gesamtdrucknahmestelle (43, 53) umfasst, die ein Rohr umfasst, das in der Hauptrichtung (14) des Sondenkörpers (50, 70) verläuft.

8. Sonde nach einem der vorherigen Ansprüche, **dadurch gekennzeichnet, dass** sie ferner eine statische Drucknahmestelle (35) umfasst.

9. Verfahren zum Messen des lokalen Anströmwinkels eines Fluidstroms entlang einer Wand (11) mittels einer Sonde (40) nach einem der vorherigen Ansprüche, **dadurch gekennzeichnet, dass** es Folgendes beinhaltet:

   • Auswählen von Drucknahmestellen aus den Drucknahmestellen (41, 42, 43, 44, 45; 51, 52, 53, 54, 55), die die beste Messgenauigkeit für den Anströmwinkel zulassen;
   • dann Berechnen des Anströmwinkels mit Bezug auf die Hauptrichtung (14) auf der Basis der an den gewählten Drucknahmestellen (44, 45) durchgeführten Druckmessungen.

10. Verfahren nach Anspruch 9, **dadurch gekennzeichnet, dass** das Auswählen aus den Drucknahmestellen (41, 42, 43, 44, 45) Folgendes beinhaltet:

    • Feststellen einer ungefähren Position eines Anhaltepunkts (33) der Strömung auf dem Sondenkörper (13, 47);
    • dann Behalten der beiden Drucknahmestellen (44, 45), die sich dem Anhaltepunkt (33) am nächsten befinden.

11. Verfahren nach Anspruch 10, **dadurch gekennzeichnet, dass** das Ermitteln der ungefähren Position eines Anhaltepunkts (33) Folgendes beinhaltet:

    • Berechnen eines ungefähren lokalen Anströmwinkels ($\sigma_a$) auf der Basis der an den Drucknahmestellen (41, 45) durchgeführten Druckmessungen, die sich von der Hauptrichtung (14) des Sondenkörpers (47) am weitesten entfernt befinden;
    • Definieren der Position des Anhaltepunkts (33) auf dem Sondenkörper (13, 47) an einem Punkt, an dem die ungefähre Richtung des lokalen Anströmwinkels ($\sigma_a$) senkrecht zum Sondenkörper (47) ist.

12. Verfahren nach einem der Ansprüche 9 bis 11, **dadurch gekennzeichnet, dass** der lokale Anströmwinkel ($\sigma$) relativ zur Hauptrichtung (14) auf der Basis der an den gewählten Drucknahmestellen (44, 45) durchgeführten Druckmessungen proportional zu einer Differenz zwischen den an den beiden gewählten Drucknahmestellen (44, 45) gemessenen Drücken

**13.** Verfahren nach Anspruch 12, das eine Sonde (40) implementiert, das ferner eine Gesamtdrucknahmestelle (43) und eine statische Drucknahmestelle (35) umfasst, **dadurch gekennzeichnet, dass** der Wert des lokalen Anströmwinkels (σ) proportional zum Verhältnis zwischen der Differenz zwischen den an den beiden gewählten Drucknahmestellen gemessenen Drücken und einer Differenz zwischen den an der

$$( \alpha_a = K \frac{P_{17} - P_{16}}{P_T - P_S} )$$

Gesamtdrucknahmestelle und an der statischen Drucknahmestelle gemessenen Drücken ist.

**14.** Verfahren nach Anspruch 13, das das Implementieren einer Sonde nach Anspruch 7 beinhaltet, **dadurch gekennzeichnet, dass** die Gesamtdrucknahmestelle aus den Drucknahmestellen (41, 42, 43, 44, 45) ausgewählt ist, die auf der Nase (46) des Sondenkörpers (13, 47), als dem Anhaltepunkt (33) am nächsten liegend.

**Claims**

**1.** A probe for measuring the local incidence of a flow of fluid along a wall (11), said probe (40) comprising a probe body (47, 50, 70) that is intended to be attached to said wall (11) and extending in a main direction (14), about which the incidence can be measured in a range of incidence, at least five pressure taps (41, 42, 43, 44, 45; 51, 52, 53, 54, 55) disposed on a nose (46) of said probe body (47), said nose being located on one side of said body in relation to a larger section (29) of said body perpendicular to said main direction (14), said nose forming a surface that is locally perpendicular to the incidence within the range, pressure measurement means (19) associated with said pressure taps (41, 42, 43, 44, 45) and computation means (20) capable of determining an incidence of the flow in relation to said main direction (14) of said probe body (47) as a function of the pressures measured by said pressure measurement means (19), **characterised in that** the range of incidence extends on either side of said main direction (14) up to said largest section (29) of said probe body (47, 50, 70), **in that** said computation means (20) are configured to select pressure taps from said pressure taps (41, 42, 43, 44, 45; 51, 52, 53, 54, 55) that allow the best local incidence measurement accuracy to be obtained and to compute the local incidence in relation to said main direction (14) on the basis of the pressure measurements carried out in the selected pressure taps (44, 45).

**2.** The probe according to claim 1, **characterised in that** said computation means (20) are configured to determine the local incidence in relation to said main direction (14) on the basis of the pressure measurements carried out in the selected pressure taps (44, 45) proportionally to a difference between the pressures measured on the selected pressure taps (44, 45).

**3.** The probe according to any one of the preceding claims, **characterised in that** said nose (47) of said probe body (13) has a rounded shape so as to arrange said pressure taps (41, 42, 43, 44, 45) on said nose (47) of said probe body (13) in distinct positions where directions perpendicular to said probe body (13) have different angles in a plane in which the angle of incidence is measured.

**4.** The probe according to any one of the preceding claims, **characterised in that** it is formed on a wing (50, 70) attached to said wall (11).

**5.** The probe according to claim 4, **characterised in that** said nose has a discontinuity (71) located in said main direction (14).

**6.** The probe according to claim 5, **characterised in that** it has at least two pressure taps (51, 52; 54, 55) arranged on a discontinuity-free surface of said probe.

**7.** The probe according to any one of the preceding claims, **characterised in that** it further comprises a total pressure tap (43, 53) comprising a tube extending in said main direction (14) of said probe body (50, 70).

**8.** The probe according to any one of the preceding claims, **characterised in that** it further comprises a static pressure tap (35).

**9.** A method for measuring the local incidence of a flow of fluid along a wall (11) by means of a probe (40) according to any one of the preceding claims, **characterised in that** it comprises:

  • selecting pressure taps from said pressure taps (41, 42, 43, 44, 45; 51, 52, 53, 54, 55) that allow the best incidence measurement accuracy to be obtained;
  • then computing the incidence in relation to said main direction (14) on the basis of the pressure measurements carried out in the selected pressure taps (44, 45).

**10.** The method according to claim 9, **characterised in**

 **EP 2 605 021 B1**

**that** selecting from said pressure taps (41, 42, 43, 44, 45) comprises:

- determining an approximate position of a stop point (33) of the flow on said probe body (13, 47);
- then retaining the two pressure taps (44, 45) that are closest to said stop point (33).

11. The method according to claim 10, **characterised in that** determining the approximate position of a stop point (33) comprises:

- computing an approximate local incidence ($\sigma_a$) on the basis of the pressure measurements carried out in the pressure taps (41, 45) farthest from said main direction (14) of said probe body (47);
- defining the position of said stop point (33) on said probe body (13, 47) at a point where the approximate direction of the local incidence ($\sigma_a$) is perpendicular to said probe body (47).

12. The method according to any one of claims 9 to 11, **characterised in that** the local incidence ($\sigma$) relative to said main direction (14) on the basis of the pressure measurements carried out in said selected pressure taps (44, 45) is proportional to a difference between the pressures measured on said two selected pressure taps (44, 45).

13. The method according to claim 12, implementing a probe (40), further comprising a total pressure tap (43) and a static pressure tap (35), **characterised in that** the value of the local incidence ($\sigma$) is proportional to the ratio between the difference between the pressures measured on said two selected pressure taps and a difference between the pressures measured on said total pressure tap and on said static pressure tap .

$$( \alpha_a = K \frac{P_{17} - P_{16}}{P_T - P_S} )$$

14. The method according to claim 13, implementing a probe according to claim 7, **characterised in that** said total pressure tap is selected from the pressure taps (41, 42, 43, 44, 45) arranged on said nose (46) of said probe body (13, 47) as being the closest to said stop point (33).

11

10

12

18

17

14

16

15

13

# FIG.1

18

15

13

17

14

16

19

20

# FIG.2

EP 2 605 021 B1

FIG.3

FIG.4

11

EP 2 605 021 B1

FIG.5

12

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9303326 A
- US 6557423 B
- EP 1020717 A